# EUROPEAN PATENT SPECIFICATION

(11) **EP 2 781 491 B1**
(45) Date of publication and mention of the grant of the patent: **25.10.2017**
(21) Application number: 14161043.6
(22) Date of filing: 21.03.2014
(51) Int. Cl.: C04B 18/08, C04B 28/02

(54) **Eco-sustainable binder**
Ökologisch nachhaltiges Bindemittel
Liant éco-durable

(30) Priority: 22.03.2013 IT TO20130228
(43) Date of publication of application: 24.09.2014
(73) Proprietor: Buzzi Unicem S.p.A., 15033 Casale Monferrato (AL) (IT); Officina Dell'Ambiente S.p.A., 27034 Lomello (Pavia) (IT)
(72) Inventor: CANONICO, Fulvio, I-10138 Torino (IT); CAPELLI, Livio, I-15030 Rosignago Monferrato (Alessandria) (IT); BIANCHI, Manuela, I-13039 Frazione Robella Trino (IT)
(74) Representative: Gerbino, Angelo

(56) References cited:
- US-A- 5 340 235
- US-A1- 2011 000 400

## Description

This invention relates to a binder composition and cementitious mixtures containing it.

US 5 340 235 discloses a method for hydraulically backfilling empty mined salt cavities by combining a pozzolanic active waste material with an effective amount of an alkaline earth metal hydroxide or oxide and saturated brine to form a pozzolanic mixture, and depositing the latter mixture in the empty salt cavity.

The object of this invention is to provide a binder having a performance comparable to that of conventional hydraulic binders, but which is obtained from non-virgin raw materials.

In accordance with the invention, this object is accomplished through a binder formed of:
- powders having a calcium oxide content of more than 45 wt. %, an alkali sulfates content of more than 1.5 wt. % and a chlorides content of more than 0.5 wt. %, and
- a fine fraction having at least CaO, SiO₂ and Al₂O₃ combined in an amorphous phase and a residue at 50 µm < 5 wt. % obtained from the grinding and aeraulic separation of ashes deriving from the incineration of a municipal solid waste (MSWIA),
the ratio by weight between MSWIA and said powders being between 9:1 and 1:1.

It should be noted that the feature of the fine fraction having a "residue at 50 µm < 5 wt. %" means that at least 95 wt. % of that fine fraction has a particle size of less than 50 µm.

Such powders may for example be by-products originating from the cycle of roasting clinker in a cement furnace and in particular may be obtained from the separation of alkalis and sulfates via a by-pass or electrostatic filter.

On the other hand, the abovementioned ashes may advantageously have undergone heat treatment at a temperature of between 800 and 1000 °C.

The binder according to the invention therefore has the advantages of having a low production cost, being obtained from by-products from other industrial processes and at the same time makes it possible to dispose of the latter without additional costs, even making use of them as secondary raw materials.

Another subject of this invention is a cementitious mixture including the abovementioned binder, in combination with other ingredients.

Such a cementitious mixture may therefore comprise:
- powders in a quantity of between 10 and 35 wt. % - preferably 30 wt. % - for example having a CaO content > 45 wt. % - preferably > 60 wt. % - and a fineness measured by determining the sieving residue at 24 microns < 60 wt. %, preferably < 45 wt. %, and
- MSWIA in a quantity of between 75 and 40 wt. %, preferably 70 wt. %.

The proportion of the mixture which may be missing in order to achieve 100% may comprise any combination of one or more of the following components:
- a filler in a quantity up to 25 wt. %;
- CaO, MgO, Ca(OH)₂, Mg(OH)₂ in a quantity up to 25 wt. %;
- an activator (or mixture of activators) based on sodium salts of organic acids, such as sodium acetate, sodium oxalate, sodium formate, in a quantity up to 10 wt. %;
- an activator (or mixture of activators) comprising fluorine salts, such as sodium fluoride, potassium fluoride, lithium fluoride, in a quantity up to 10 wt. %;
- an activator (or mixture of activators) based on lithium salts such as lithium carbonate, lithium nitrate, lithium sulfate, in a quantity up to 10 wt. %;
- an inorganic activator (or mixture thereof) based on sodium hydroxide or soluble sodium salts such as sodium silicate, sodium aluminate, sodium thiosulfate, in quantities up to 10 wt. %;
- a fluidising additive - for example sodium naphthalene sulfonate - in a quantity between 0.2 and 2 wt. %;
- electrostatic filter dusts in a quantity up to 25 wt. %; and
- one or more of the following materials: fly ash, heavy ash, natural or artificial pozzolana, granulated blast furnace slag, meta-kaolin, calcined clay, calcined perlite, ash deriving from the combustion of biomass, granular or vitreous materials deriving from the vitrification of light ash or heavy ash, fine fractions deriving from the demolition of concrete, powders recovered from the filtration process of industrial plants for the manufacture of cement, expanded clays, limestone, plaster, cardboard, in a quantity up to 50 wt. %.

The cementitious mixtures according to the invention can be used to produce mortars or concretes offering significant physical and mechanical performance, although being without conventional cementitious binders. They may also be added to ordinary cements (in a maximum quantity of 30 wt. % replacing clinker) or concrete (in a maximum quantity of 30 wt. % replacing cement), with unchanged short and long-term performance and contributing to the construction of manufactured articles with lower incorporated energy by virtue of the use mainly of wastes from industrial processing.

The cementitious mortar manufactured in this way does not require any heat treatment for settling and hardening. However, accelerated ageing, over a period of between 30 minutes and 24 hours at a temperature of between 25°C and 80°C, makes it possible to increase the development of mechanical strength in a short time.

The materials obtained in this way demonstrate exceptional stability to chemical aggression by acid agents and sulfates.

Examples of embodiments of the invention will now be provided purely by way of illustration and without limitation through the appended drawings in which:
Figure 1 is a diagram illustrating the development of strength over time in various mortars containing conventional CEM IV/A-P 42.5 N cement mixed with progressively increasing aliquots of a mixture according to the invention (that is after 24 hours, 7 days, 28 days, 90 days), and
Figure 2 is a diagram illustrating the development of strength over time in various mortars containing conventional CEM II/B-LL 32.5 R cement mixed with progressively increasing aliquots of a mixture according to the invention (that is after 24 hours, 7 days, 28 days, 90 days).

In these examples, as in all other parts of this disclosure, the percentages indicated are to be taken to be percentages by weight unless explicitly stated otherwise.

### EXAMPLES

Two cementitious mixtures containing a binder according to the invention formed of powders obtained by separation through by-pass and MSWIA were prepared.

The powders had the following percentage composition:

| | |
|---|---|
| SiO₂ | 17.09 |
| Al₂O₃ | 4.06 |
| Fe₂O₃ | 2.47 |
| CaO | 60.25 |
| MgO | 1.3 |
| Na₂O | 0.48 |
| K₂O | 4.25 |
| Cl⁻ | 1.95 |
| SO₃ | 3.9 |
| Loss on ignition | 4.25 |

The MSWIA had the following percentage composition:

| | |
|---|---|
| Loss on ignition | 6.6 |
| Al₂O₃ | 7.44 |
| BaO | 0.18 |
| CaO | 18.41 |
| Fe₂O₃ | 3.91 |
| K₂O | 1.18 |
| MgO | 2.72 |
| MnO | 0.11 |
| Na₂O | 7.41 |
| P₂O₅ | 1.06 |
| SO₃ | 0.83 |
| SiO₂ | 48.29 |
| TiO₂ | 0.61 |
| Cl⁻ | 0.31 |

Each of the two mixtures was then aged for 24 hours at temperatures of 20 and 80°C. Samples A, B, C and D, which subsequently underwent mechanical strength tests, were obtained in this way.

Table I below shows the corresponding composition, the characteristics of the ageing process and data relating to the development of corresponding mechanical strength over time for each of these samples.

**TABLE I**

| **Sample** | **A** | **B** | **C** | **D** |
|---|---|---|---|---|
| **Ageing temperature** | 20°C | 20°C | 80°C | 80°C |
| **Ageing time** | 24h | 24h | 24h | 24h |
| **MSWIA (%)** | 69.0 | 39.0 | 69.0 | 39.0 |
| **Fly ash (%)** | --- | 30.0 | --- | 30.0 |
| **Powders (%)** | 30.0 | 30.0 | 30.0 | 30.0 |
| **Naphthalene sulfonate** (%) | 1.0 | 1.0 | 1.0 | 1.0 |
| **Water/cement ratio** | 0.45 | 0.45 | 0.45 | 0.45 |
| **Flow (spread) (%)** | 30 | 80 | 30 | 80 |
| **Compression strength after 24h (MPa)** | 1.6 | 0.3 | 8.6 | 9.3 |
| **Compression strength after 7 days (MPa)** | 6.0 | 3.3 | 9.9 | 9.6 |
| **Compression strength after 28 days (MPa)** | 18.0 | 10.6 | 18.8 | 15.8 |
| **Compression strength after 90 days (MPa)** | 31.2 | 22.8 | 27.5 | 25.1 |

As will be seen from the data shown in Table I, the mixtures of samples A-D develop considerable mechanical strength even though they substantially comprise only waste materials without containing conventional Portland cement. These data also demonstrate that these mixtures are active at both ambient temperature and at high ageing temperatures up to 80°C.

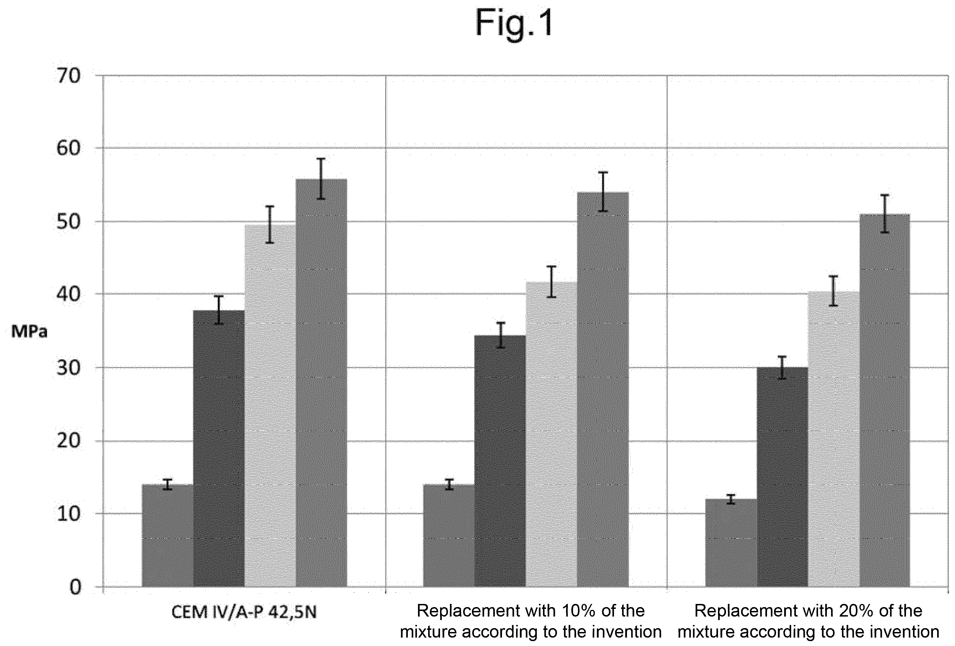

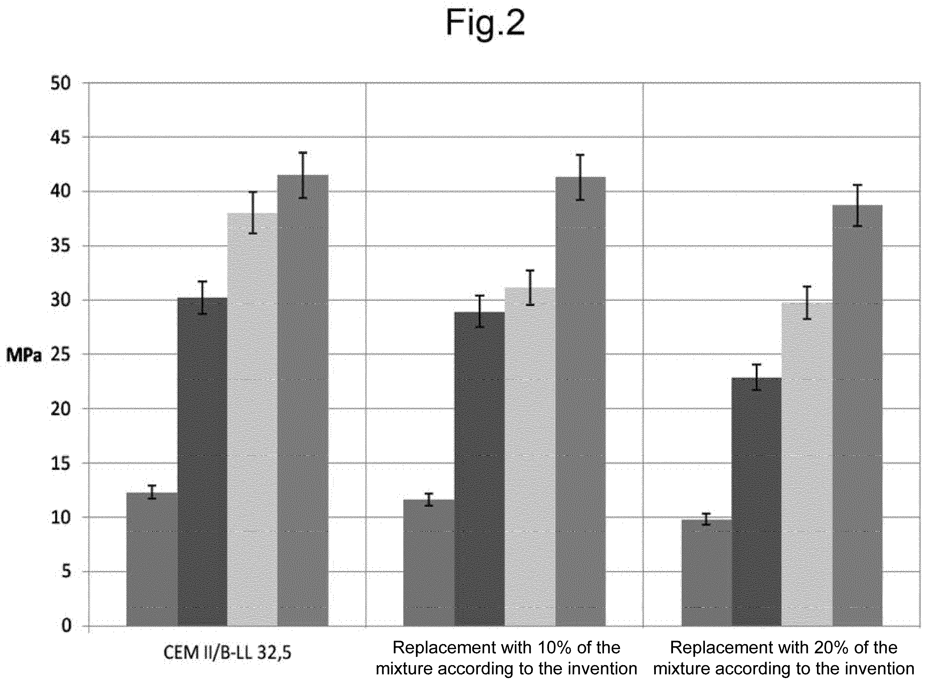

The abovementioned mixtures of samples A-D may also be used to replace aliquots of up to 30% of conventional cements in standard mortars. In particular Figures 1 and 2 show mechanical strength measured at 24 hours, 7 days, 28 days and 90 days for various samples in which progressively increasing aliquots of two conventional cements (that is CEM IV/A-P 42.5 N and CEM II/B-LL 32.5 R) had been replaced by mixtures according to the invention.

As will be seen, the corresponding mechanical performances are not substantially influenced by the use of a fraction of the replacement mixture.

Of course, without affecting the principle of the invention, details of embodiments and methods of implementation may be varied widely in comparison with what has been described purely by way of example without thereby going beyond the scope of the invention as defined by the appended claims.

## Claims

1. Binder formed from:
- powders having a calcium oxide content of more than 45 wt. %, an alkali sulfates content of more than 1.5 wt. % and a chlorides content of more than 0.5 wt. %, and
- a fine fraction containing at least CaO, SiO₂ and Al₂O₃ combined in an amorphous phase and having a residue at 50 µm < 5 wt. %, of ground and aeraulic separated ashes deriving from the incineration of municipal solid wastes (MSWIA),
the ratio by weight between MSWIA and the said powders being between 9:1 and 1:1.

2. Binder according to claim 1, in which the said powders originate from the cycle of roasting clinker in a cement furnace.

3. Binder according to claim 2, in which the said powders are obtained by the separation of alkalis and sulfates through by-passes or electrostatic filters.

4. Binder according to any one of the preceding claims, in which the said ashes have undergone heat treatment at a temperature of between 800 and 1000°C.

5. Cementitious mixture comprising a binder according to any one of the preceding claims in combination with other ingredients, in which mixture the said powders are present in a quantity of between 10 and 35 wt. % and the said MSWIA is present in a quantity of between 75 and 40 wt. %.

6. A mixture according to claim 5, containing CaO, MgO, Ca(OH)₂, Mg(OH)₂ in a quantity up to 25 wt. %.

7. Mixture according to any one of preceding claims 5 and 6, containing an activator such as one or more of sodium salts of organic acids, fluoride salts, lithium salts and sodium hydroxide, each of which is in a quantity up to 10 wt. %.

8. Mixture according to any one of previous claims 5 to 7, containing a fluidising additive such as sodium naphthalene sulfonate in a quantity of between 0.2 and 2 wt. %.

9. Mixture according to any one of preceding claims 5 to 8, containing fly ash in a quantity up to 50 wt.%.

## Patentansprüche

1. Bindemittel, ausgebildet aus:
- Pulvern mit einem Calciumoxidgehalt von mehr als 45 Gew.-%, einem Gehalt von Alkalisulfaten von mehr als 1,5 Gew.-% und einem Gehalt von Chloriden von mehr als 0,5 Gew.-%, und
- einem Feinanteil, der mindestens CaO, SiO₂ und Al₂O₃ kombiniert in einer amorphen Phase enthält und einen Rest bei 50 µm < 5 Gew.-% von gemahlenen und pneumatisch getrennten Aschen, die von der Verbrennung von festen kommunalen Abfällen (MSWIA) stammen, aufweist,
wobei das Gewichtsverhältnis zwischen MSWIA und den Pulvern zwischen 9:1 und 1:1 liegt.

2. Bindemittel nach Anspruch 1, bei dem die Pulver von dem Zyklus des Röstens von Klinker in einem Zementofen stammen.

3. Bindemittel nach Anspruch 2, bei dem die Pulver durch die Trennung von Alkaliverbindungen und Sulfaten durch Umgehungsleitungen oder elektrostatische Filter erhalten worden sind.

4. Bindemittel nach einem der vorhergehenden Ansprüche, in dem die Aschen einer Wärmebehandlung bei einer Temperatur zwischen 800 und 1000 °C unterzogen worden sind.

5. Zementartiges Gemisch, das ein Bindemittel nach einem der vorhergehenden Ansprüche in einer Kombination mit anderen Bestandteilen umfasst, wobei die Pulver in dem Gemisch in einer Menge zwischen 10 und 35 Gew.-% vorliegen und die MSWIA in einer Menge zwischen 75 und 40 Gew.-% vorliegen.

6. Gemisch nach Anspruch 5, das CaO, MgO, Ca(OH)₂, Mg(OH)₂ in einer Menge bis zu 25 Gew.-% enthält.

7. Gemisch nach einem der Ansprüche 5 und 6, das ein Aktivierungsmittel, wie z.B. eines oder mehrere von Natriumsalzen von organischen Säuren, Fluoridsalzen, Lithiumsalzen und Natriumhydroxid, enthält, wobei jedes davon in einer Menge bis zu 10 Gew.-% vorliegt.

8. Gemisch nach einem der Ansprüche 5 bis 7, das ein Fluidisierungsadditiv, wie z.B. Natriumnaphthalinsulfonat, in einer Menge zwischen 0,2 und 2 Gew.-% enthält.

9. Gemisch nach einem der Ansprüche 5 bis 8, das Flugasche in einer Menge bis zu 50 Gew.-% enthält.

## Revendications

1. Liant formé à partir de :
- poudres ayant une teneur en oxyde de calcium de plus de 45 % en poids, une teneur en sulfates alcalins de plus de 1,5 % en poids et une teneur en chlorures de plus de 0,5 % en poids, et
- une fraction fine contenant au moins du CaO, du SiO₂ et de l'Al₂O₃ combinés dans une phase amorphe et ayant un résidu à 50 µm < 5 % en poids, de cendres obtenues par broyage et séparation aéraulique issues de l'incinération de déchets ménagers solides (MSWIA),
le rapport en poids entre les MSWIA et lesdites poudres étant entre 9/1 et 1/1.

2. Liant selon la revendication 1, dans lequel lesdites poudres proviennent du cycle de grillage du clinker dans un four à ciment.

3. Liant selon la revendication 2, dans lequel lesdites poudres sont obtenues par séparation des alcalis et des sulfates par des dispositifs de dérivation ou des filtres électrostatiques.

4. Liant selon l'une quelconque des revendications précédentes, dans lequel lesdites cendres ont subi un traitement thermique à une température se situant entre 800 et 1000°C.

5. Mélange cimentaire comprenant un liant selon l'une quelconque des revendications précédentes en association avec d'autres ingrédients, mélange dans lequel lesdites poudres sont présentes en une quantité se situant entre 10 et 35 % en poids et lesdits MSWIA sont présents en une quantité se situant entre 75 et 40 % en poids.

6. Mélange selon la revendication 5, contenant du CaO, du MgO, du Ca(OH)₂, du Mg(OH)₂ en une quantité allant jusqu'à 25 % en poids.

7. Mélange selon l'une quelconque des revendications précédentes 5 et 6, contenant un activateur tel qu'un ou plusieurs des composés suivants : sels de sodium d'acides organiques, sels de fluorure, sels de lithium et hydroxyde de sodium, chacun étant en une quantité allant jusqu'à 10 % en poids.

8. Mélange selon l'une quelconque des revendications précédentes 5 à 7, contenant un additif fluidifiant tel que le sel de sodium du naphtalène sulfonate en une quantité se situant entre 0,2 et 2 % en poids.

9. Mélange selon l'une quelconque des revendications précédentes 5 à 8, contenant des cendres volantes en une quantité allant jusqu'à 50 % en poids.
